# EUROPEAN PATENT SPECIFICATION

(11) **EP 3 502 831 B1**
(45) Date of publication and mention of the grant of the patent: **11.08.2021**
(21) Application number: 17210488.7
(22) Date of filing: 22.12.2017
(51) Int. Cl.: G06F 1/20, G09F 9/30, H05K 7/20

(54) **DIGITAL SIGNAGE DISPLAY**
DIGITALE BESCHILDERUNGSANZEIGE
AFFICHAGE DE SIGNATURE NUMÉRIQUE

(43) Date of publication of application: 26.06.2019
(73) Proprietor: Vestel Elektronik Sanayi ve Ticaret A.S., 45030 Manisa (TR)
(72) Inventor: Kara, Eren, 45030 Manisa (TR)
(74) Representative: Beck Greener LLP

(56) References cited:
- US-A1- 2013 186 598
- US-A1- 2014 281 559
- US-B1- 7 256 992

## Description

The present invention relates to a digital signage display and in particular to a digital signage display with active board locating. The present invention also relates to a method for manufacturing a digital signage display, a method for controlling heat transfer within a digital signage display, and an active board location system for a digital signage display.

The use of digital signage is extremely widespread, particularly in commercial settings such as airports, shopping precincts, and restaurants. Vendors are always looking for ways in which to increase the lifespan of their signs to reduce cost and/or maximise the dissemination of information to potential customers.

In order to be able to present static or moving images so that the image displayed can be adapted for different uses, a traditional digital sign will comprise various hardware components as well as the software components required to manage the digital content. The hardware will include a display screen, such as an LCD or LED screen, and a main board to which other components of the hardware (CPU, memory, ports, etc) will be connected. A second component such as a power board is generally also present. This will be configured to be connected up to the main board and to a source of power, and may function to control supply of power to the main board and other components.

Adaptability is a major consideration in the design and manufacture of such digital signs and the ability to present a wide variety of information in the form of static or moving colour images on the same board, whilst maximising the lifespan of the display screen and associated components is crucial.

KR-A-2016/0112920 describes a mobile device, specifically a mobile phone device, including a replaceable sliding portion which moves towards and away from the main body of the device along guide rails such that in one position it is separated from the main body of the device in which power to the battery is cut off. The sliding portion is coupled to an antenna, battery, and sub-circuit board, whilst the main circuit board is located on the main body of the terminal. It is mentioned that the technology described can be used for digital signage, although it is not clear where the various parts would be located in this case.

US 2014/281559 A1 relates to a signage display which can be used in portrait and landscape orientation and which comprises a main board and a second component on said main board.

TW-A-2009/25830 relates to a module for a digital sign comprising a main circuit board and an adapter board coupled by a connector. In order to facilitate maintenance of the electronics, the adapter board is mounted on two slide rails and can be at least partially removed from the main body. TW-A-2009/26091 describes a digital display with a heat dissipation system comprising two sub-systems of fans. One sub-system is located near to the mother board and another near to the main board of the computer module within the digital display.

The power board of a display tends to generate significant heat energy during use. This can affect the operation of the main board and other components and can cause the digital sign to wear out more quickly. Generally (as in TW-A-2011/25481 and TW-A-2009/26091) heat dissipation elements such as fans and the like are used to direct heat away from heat generating parts of electronic devices including main boards and power boards, however this method cannot be adapted with the board in different orientations and is not always particularly effective.

There is a need for improvements in the functioning of a digital display which can be used in different modes.

The invention is defined by the independent claims. Further aspects of the invention are outlined in the dependent claims.

According to a first aspect of the present invention, there is provided a digital signage display comprising: a display screen; a main board; a second component; and means for moving the second component between a first position and a second position, wherein the display comprises connections for electrically coupling the second component to each of a power supply and the main board in each of the first position and the second position.

Providing means for the second component to be moved between (at least) two positions means that the position of the second component, which may be a heat generating component such as a power board, can be adapted to minimise the effect of this heat energy output on the rest of the hardware components within the system. This method for reducing damage to hardware components due to high temperatures is extremely efficient in terms of power usage because once the second component is moved into its optimum position, no power is required to run the usual heat dissipation systems such as fan systems (unless these are also included as an addition to the system). The means are means for automatically moving the second component between the first and second position. For example, user input may not be required in order for the component to travel between the two positions. The display board includes a housing coupled to the display screen or on which the display screen is mounted within which the main board, second component, means for moving the second component, and connectors are contained.

Furthermore, the display comprises at least one sensor configured to detect movement of the display screen from the landscape orientation to the portrait orientation. Including such a sensor means that input from a user is not required in order to initiate movement of the second component from the first to the second position.

In embodiments, the sensor is a gyroscopic sensor. The gyroscope may be of any type (e.g. optical, rotary, or vibrating structure).

The main board is configured to initiate movement of the second component from the first position to the second position in response to a signal from the sensor indicating that the orientation of the screen has changed. This provides means by which the positioning of the second component can be adapted in response to a change in orientation within user input being required.

The display screen has a portrait orientation and a landscape orientation and the main board is located within the housing such that the first position of the second component is below the main board and the second position of the second component is above the main board when the screen is in its portrait orientation. This helps to protect the main board itself, which is a crucial component of the hardware and one of the most complex, from heat damage and premature failure.

When the screen is in the portrait orientation the first position of the second component is below the centre of the screen and the second position of the second component is above the centre of the screen. Important components of the hardware, such as the main board, are generally located towards or at the centre of the screen. If this is the case, then the location of a first position below the centre and a second position above the centre in portrait mode will mean that these components can be protected from heat damage by the active board location system.

The main board is configured to initiate movement of the second component from the first position to the second position in response to a signal from the sensor indicating that the display screen has moved from the landscape to the portrait orientation.

In embodiments, the second component is moveable along at least one rail from the first position to the second position. Rails provide a simple way to allow for movement of the second component and can provide support for the second component as it moves. Two rails on either side of the second component will help to provide additional support. Figures described below show the rail system as comprising a pair of straight rails; however rails can also be curved to allow the second component to move around corners or around other components if necessary.

In embodiments, the digital signage display comprises at least one step motor to cause the second component to move along the rail from the first position to the second position and initiating movement of the second component comprises providing power to the at least one step motor.

In embodiments, the main board is configured to stop movement of the second component when a connection is made between the second component and the power supply and/or the second component and the main board in the second position.

In embodiments, the second component is a power board. Power boards will generally produce heat when in use.

According to a second aspect of the present invention, there is provided a method for producing a digital signage display comprising: coupling a display screen to a housing; providing a main board and a second component within the housing; providing means for moving the second component between a first position and a second position, wherein the display comprises connections for electrically coupling the second component to each of a power supply and a main board in each of the first position and the second position.

According to a third aspect of the present invention, there is provided a method for controlling heat transfer within a digital signage display comprising: a display screen; a main board; a second component; and means for moving the second component between a first position wherein the second component is connected to each of a power supply and the main board and a second position wherein the second component is connected to each of a power supply and the main board, the method comprising: detecting, by a sensor, that the display screen is in a portrait mode; in response to a signal from the sensor indicating that the display screen is in the portrait mode, causing, by the main board, movement of the second component from the first position to the second position.

Embodiments of the present invention will now be described in detail with reference to the accompanying drawings, in which:
Figure 1a shows examples of display boards in the portrait configuration;
Figure 1b shows examples of display boards in the landscape configuration;
Figure 2 shows an example of hardware positioning for a display board without active board locating;
Figure 3 shows an example of hardware positioning for a display board with active board locating;
Figure 4 shows an example of a display board wherein the second component is located below and to the side of the main board;
Figure 5 shows a flowchart with steps of a method for active board locating.

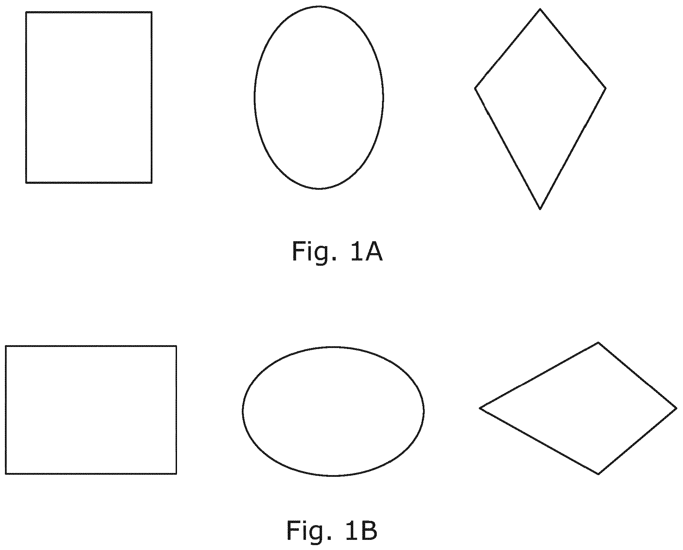

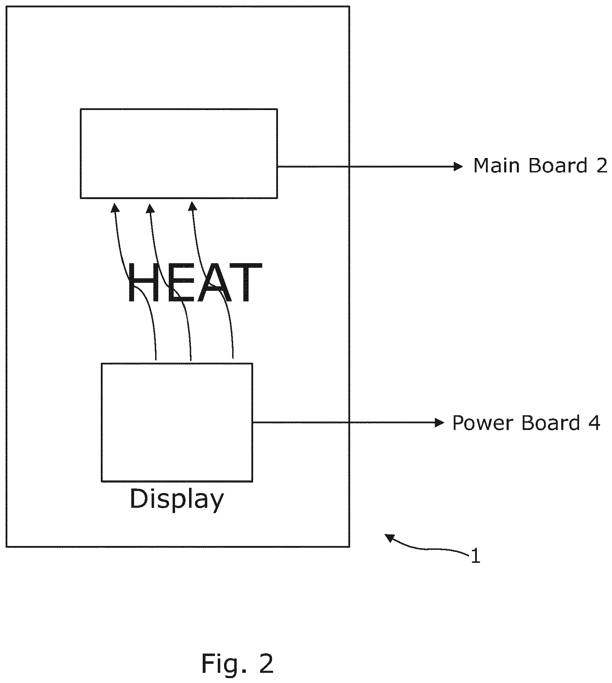

A digital display which can be used in both a portrait and a landscape mode comprises a display screen, such as an LED or LCD screen, and a housing behind the screen containing the hardware needed to power the display and to execute the required functions embodied in software. Figure 2 illustrates one such display. The shape of the display screen is rectangular in this case, and can be rotated through 90 degrees between a landscape and a portrait mode. Any shape of screen having one axis longer than another will have a portrait mode (shortest axis oriented horizontally) and a landscape mode (longest axis oriented horizontally). Figures 1a and 1b illustrate rectangular, kite shaped, and oval screens in the landscape and portrait orientation respectively.

Some display screens may also completely surround a housing containing hardware components. The screen may be cylindrical, for example, with hardware located within the tube formed by the screen. In such a case, the portrait orientation described above will be with the ends of the tube located uppermost and lowermost.

The traditional screen setup shown in Figure 2 is orientated in a portrait mode and a housing located behind the screen 1 contains at least two PCBs, one main board PCB 2 and one power board PCB 4. For a rectangular screen which has two longer sides and two shorter sides, one of the shorter sides will be uppermost when the screen is in portrait mode and one of the longer sides will be uppermost when the screen is in the landscape mode. In a traditional screen configuration, the power board is located to the upper side or lower side when the screen is in portrait mode as shown in Figure 2. In the figure, the main board is located above the power board and the power board is located towards the bottom of the screen in use. The power board will generate heat which will rise up through the system housing to the main board, affecting the functionality of the main board 2 and other components in the upper portion of the housing. This may lead to the early onset of failures.

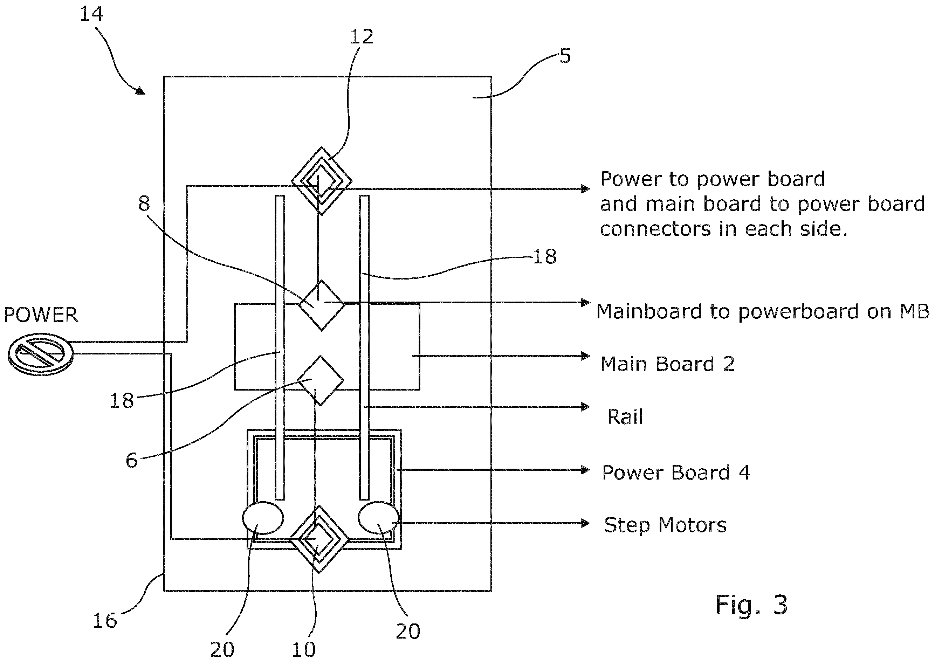

Generally, the main board will be static and will be located near to or in the centre of the display with the power board located in a position that is displaced from the centre of the screen towards one side (e.g., the lower side). Figure 3 shows a display screen 5 in portrait mode with an integrated system for reducing heat transfer from the power board 4 to the main board 2. The main board is located in the centre of and behind the display screen and comprises two connectors 6 and 8, one (8) on an upper side and one (6) on a lower side, which couple the main board to connectors 10 and 12 at the upper (12) and lower (10) ends of the display screen. The upper side 14 and lower side 16 here refer to their position relative to the centre of the screen with the screen in its portrait orientation. The integrated system for active board location will be useful in the case of a rectangular screen with a power board located towards a shorter end of the board when the screen is in portrait mode. It may be that the power board is located towards one of the longer sides of the screen relative to the centre of the screen and the main board. In such a case the integrated active board location system will be useful in a landscape mode, again to ensure that the power board is located in use above the main board to minimise the heat energy transferred to the main board and to other components located towards the centre of the screen.

Additional connectors 12 and 14 are located in the top and bottom half of the display screen (above or below the main board) for connecting the power board to a power supply. These may be the same connectors as those which couple the main board to the power board or may be separate connectors. The active location system also includes rails 18 along which the power board is able to travel from a lower side 16 of the display screen to an upper side 14 and vice versa. Step motors 20 are located at one end of the rails. When powered, these will cause the power board to move along the rails from a first position in a lower half of the display screen and below the main board to a second position in an upper half of the display screen and above the main board.

Running the motors in the opposite direction will cause the power board to travel downwards along the rails from the second position to the first position. The ability to move the power board between two possible locations will be useful in that the board can be used in either of the two possible portrait orientations, e.g., with either of the two shorter sides facing upwards whilst still protecting centrally located components from the effects of heat produced by the power board in use.

In the first position, the power board is located such that the connector 10 in the lower half of the display contacts an equivalent connector in the power board to transfer power from the power source can power the power board. Likewise, in the second position a connection is made between the power board and the power source via the second connector 12. When the power board is between these two positions (i.e. in the centre of the display screen in a position above or behind the main board) the power board is not connected to a power source. Step motors may be powered by a small power circuit or rechargeable battery which may be located anywhere within the housing, or outside of the housing.

Connectors 10 and 12 are both coupled to a single power source in this embodiment, but may be coupled to separate power sources. The former configuration may be more convenient in terms of the location of various parts within the system. Including two power separate sources will allow the display to work in at least one configuration (power board located uppermost or lowermost) in the event of failure of one of the power sources. In this case, there may be an override to allow a user to manually switch on the motors to move the power board to the opposite side of the main board with the screen in any orientation. Although this will lead to a possible reduction in function due to heat transfer if the power board is located below the main board as a result, this will at least allow the display to work if the power source coupled to the lower connecter 10 is the only working source.

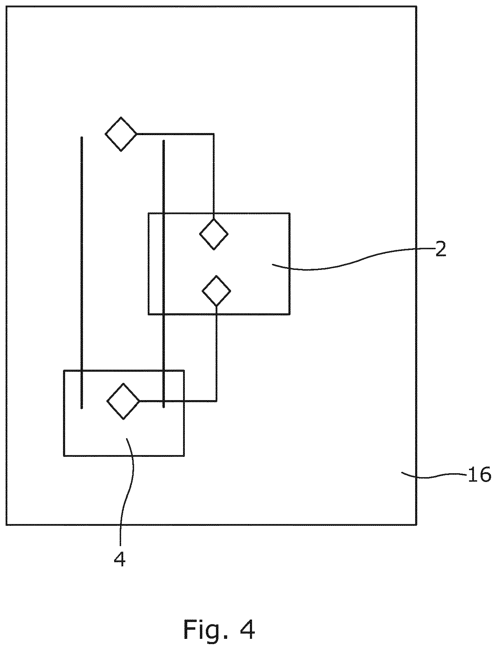

The display system includes sensors which are able to detect the orientation or movement of the screen and convey this information to the main board. These sensors may be gyroscopic sensors or accelerometers, for example. If the display screen is orientated such that the power board is located below or substantially below the main board, a signal will be sent to the main board to cause the step motors to run in the correct direction to move the power board along the rails to a position that is above or substantially above the main board. In embodiment, such a signal may be sent if any part of the power board is directly below any part of the main board. In particular, the power board 4 may be located below and to the side of the main board 2 (as shown in Figure 4) so that a proportion of the air heated by the power board will still travel towards the main board as it rises. Moving the power board along the rails 18 will still move the power board away from the bottom half of the screen 16 to a position where rising hot air from the power board will not affect the functioning of the main board or other components in the central portion of the display screen housing.

Any shape of screen can be used, so long as the sensor is able to distinguish between a position wherein the power board is located below, or at least partially below the main board and a position where it is not. The mechanism could work with a circular or hexagonal screen, for example.

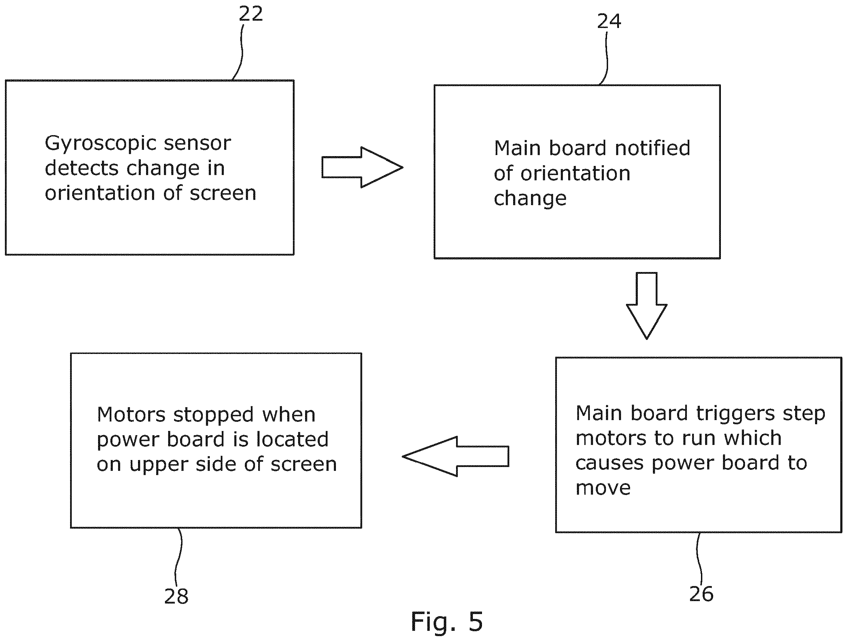

Figure 5 is a flowchart outlining how the system functions to prevent heat generated by the power board from affecting the function of the main board. At step 22 the gyroscopic (or other) sensor within the display screen detects that the screen has been moved into, is being moved into, or is in a portrait orientation and sends a signal to the main board at step 24. The main board activates the step motors at step 26, which will cause the power board to move from the first position to the second position. Once the power board reaches the second position, the main board will cause the motors to stop running at step 28. It will only be necessary to move the power board at all if it is located below the main board in portrait mode (rather than above). Some systems will only be workable one way up (due to the position of buttons or wording on the housing, for example) in which case this will not be an issue. In other situations, it should still be possible for the system to detect whether the power board is below or above the main board using the sensors or additional sensors.

A temperature sensor may also be included at or near the centre of the screen, which may provide an alternative or additional indication to the main board that the motors should be activated to alter the position of the power board relative to the centrally located components within the display screen housing. If the central portion of the screen housing is too hot, for example, this may indicate that the power board is located beneath the central region and that it is producing above a threshold amount of heat which is being transferred to the components in the central region.

Once the power board reaches the upper side of the screen, power to the motors is cut off by the main board (step 28 in Figure 5). The fact that the power board has reached the second position may be detected ether by a resistance to the motion of the power board due to the particular structure of the end of the rails or by the fact that a connection has been made between the power board and the power source, which information may be detected and conveyed to the main board or detected by the main board itself. The relative position of the connectors on the power board and in the housing may also be detected, for example via a radiation emitting means coupled to the power board or housing which hit a respective detector on the other of the housing or power board when the power board is in the first or in the second position.

Although the above description refers to a power board as the heat generating element and the main board as the element to be protected from heat damage, the above system could work to protect any element of the system which could potentially be damaged by heating from any other element which generates heat whilst the system is in use. Obviously, the various connecting portions would need to be adapted to suit the requirements of these elements (i.e. whether these need to be connected to the main board and a power supply in the upper or lower positions or to other parts of the system). In most cases, the various elements will require connection to the main board in which case two such connectors will be needed to couple the moveable element to the main board in both the upper and lower position. While the power board or other heat generating component is being moved, the system may go into a low power mode. The motors do not require much power in order to run, and so including a low power mode in this way can help to save power during the transition.

In order that the above active board locating mechanism can be used in any orientation, there may be more than two positions of the power board within the housing at which the power board or second component can be located and connected to a power source and to the main board. The housing may, for example, include one or more circular rails and several distinct positions along this rail wherein the power board or second component can be electrically connected to each of the main board and a power source so that the power board can be moved to a position above the central region of the screen no matter what the orientation of the screen may be.

Embodiments of the present invention have been described with particular reference to the examples illustrated. However, it will be appreciated that variations and modifications may be made to the examples described within the scope of the claims.

## Claims

1. A digital signage display comprising:
a display screen;
a main board (2);
a second component (4); and
means for automatically moving the second component between a first position and a second position, wherein the digital signage display comprises connections for electrically coupling the second component to each of a power supply and the main board in each of the first position and the second position, wherein
the digital signage display comprises at least one sensor configured to detect a change in orientation of the display screen and
wherein the main board is configured to initiate movement of the second component from the first position to the second position in response to a signal from the sensor indicating that the orientation of the display screen has changed; and
wherein the display screen has a portrait orientation and a landscape orientation and the main board is located within the housing such that the first position of the second component is below the main board and the second position is above the main board when the display screen is in its portrait orientation.

2. The digital signage display of claim 1, wherein the sensor is a gyroscopic sensor.

3. The digital signage display of claim 1, wherein when the display screen is in the portrait orientation the first position of the second component is below the centre of the display screen and the second position of the second component is above the centre of the display screen.

4. The digital signage display of any of claims 1 to 3, wherein the main board is configured to initiate movement of the second component from the first position to the second position in response to a signal from the sensor indicating that the display screen has moved from the landscape to the portrait orientation.

5. The digital signage display of any of claims 1 to 4, wherein the second component is moveable along at least one rail from the first position to the second position.

6. The digital signage display of claim 5, wherein the digital signage display comprises at least one step motor to cause the second component to move along the at least one rail from the first position to the second position and initiating movement of the second component comprises providing power to the at least one step motor.

7. The digital signage display of claims 5 or 6, wherein the main board is configured to stop movement of the second component when a connection is made between the power board and the power supply and/or the second component and the main board in the second position.

8. The digital signage display of any of claims 1 to 7, wherein the second component is a power board.

9. A method for producing a digital signage display according to any of claims 1 to 8, the method comprising:
providing a main board (2) and a second component (4);
providing means for moving the second component between a first position and a second position, wherein the digital signage display comprises connections for electrically coupling the second component to each of a power supply and the main board in each of the first position and the second position.

10. A method for controlling heat transfer within a digital signage display according to any of claims 1 to 8, the method comprising: detecting, by a sensor, that the display screen is in a portrait mode; in response to a signal from the sensor indicating that the display screen is in the portrait mode, causing, by the main board (2), movement of the second component (4) from the first position to the second position.

## Patentansprüche

1. Digitale Beschilderungsanzeige, umfassend:
einen Anzeigebildschirm;
eine Hauptplatine (2);
eine zweite Komponente (4); und
Mittel zum automatischen Bewegen der zweiten Komponente zwischen einer ersten Position und einer zweiten Position, wobei die digitale Beschilderungsanzeige Verbindungen zum elektrischen Koppeln der zweiten Komponente an jeweils eine Stromversorgung und die Hauptplatine in der jeweils ersten Position und der zweiten Position umfasst, wobei die digitale Beschilderungsanzeige wenigstens einen Sensor umfasst, der dazu konfiguriert ist, eine Änderung der Ausrichtung des Anzeigebildschirms zu erfassen und
wobei die Hauptplatine dazu konfiguriert ist, als Reaktion auf ein Signal vom Sensor, das angibt, dass sich die Ausrichtung des Anzeigebildschirms geändert hat, eine Bewegung der zweiten Komponente von der ersten Position in die zweite Position auszulösen; und
wobei der Anzeigebildschirm eine Hochformat- und eine Querformatausrichtung aufweist und die Hauptplatine innerhalb des Gehäuses derart angeordnet ist, dass die erste Position der zweiten Komponente unter der Hauptplatine liegt und die zweite Position über der Hauptplatine liegt, wenn sich der Anzeigebildschirm in seiner Hochformatausrichtung befindet.

2. Digitale Beschilderungsanzeige nach Anspruch 1, wobei der Sensor ein Kreiselsensor ist.

3. Digitale Beschilderungsanzeige nach Anspruch 1, wobei, wenn sich der Anzeigebildschirm in der Hochformatausrichtung befindet, die erste Position der zweiten Komponente unter der Mitte des Anzeigebildschirms liegt und die zweite Position der zweiten Komponente über der Mitte des Anzeigebildschirms liegt.

4. Digitale Beschilderungsanzeige nach einem der Ansprüche 1 bis 3, wobei die Hauptplatine dazu konfiguriert ist, als Reaktion auf ein Signal vom Sensor, das angibt, dass sich der Anzeigebildschirm von der Querformatausrichtung in die Hochformatausrichtung bewegt hat, eine Bewegung der zweiten Komponente von der ersten Position in die zweite Position auszulösen.

5. Digitale Beschilderungsanzeige nach einem der Ansprüche 1 bis 4, wobei die zweite Komponente entlang wenigstens einer Schiene von der ersten Position in die zweite Position bewegbar ist.

6. Digitale Beschilderungsanzeige nach Anspruch 5, wobei die digitale Beschilderungsanzeige wenigstens einen Schrittmotor umfasst, um zu bewirken, dass sich die zweite Komponente entlang der wenigstens einen Schiene von der ersten Position in die zweite Position bewegt und wobei das Auslösen der Bewegung der zweiten Komponente das Bereitstellen von Strom für den wenigstens einen Schrittmotor umfasst.

7. Digitale Beschilderungsanzeige nach Anspruch 5 oder 6, wobei die Hauptplatine dazu konfiguriert ist, die Bewegung der zweiten Komponente zu stoppen, wenn eine Verbindung zwischen der Stromversorgungsplatine und der Stromversorgung und/oder der zweiten Komponente und der Hauptplatine in der zweiten Position hergestellt wird.

8. Digitale Beschilderungsanzeige nach einem der Ansprüche 1 bis 7, wobei die zweite Komponente eine Stromversorgungsplatine ist.

9. Verfahren zum Produzieren einer digitalen Beschilderungsanzeige nach einem der Ansprüche 1 bis 8, wobei das Verfahren umfasst:
Bereitstellen einer Hauptplatine (2) und einer zweiten Komponente (4);
Bereitstellen von Mitteln zum Bewegen der zweiten Komponente zwischen einer ersten Position und einer zweiten Position, wobei die digitale Beschilderungsanzeige Verbindungen zum elektrischen Koppeln der zweiten Komponente an jeweils eine Stromversorgung und die Hauptplatine in der jeweils ersten Position und der zweiten Position umfasst.

10. Verfahren zum Steuern einer Wärmeübertragung innerhalb einer digitalen Beschilderungsanzeige nach einem der Ansprüche 1 bis 8, wobei das Verfahren umfasst: Erfassen durch einen Sensor, dass sich der Anzeigebildschirm in einem Hochformat befindet; durch die Hauptplatine (2) Bewirken einer Bewegung der zweiten Komponente (4) von der ersten Position in die zweite Position als Reaktion auf ein Signal vom Sensor, das angibt, dass sich der Anzeigebildschirm im Hochformat befindet.

## Revendications

1. Affichage de signalisation numérique comprenant :
un écran d'affichage ;
une carte principale (2) ;
un second composant (4) ; et
un moyen pour déplacer automatiquement le second composant entre une première position et une seconde position, l'affichage de signalisation numérique comprenant des connexions pour coupler électriquement le second composant à chacune d'une alimentation et de la carte principale dans chacune de la première position et de la seconde position,
dans lequel l'affichage de signalisation numérique comprend au moins un capteur configuré pour détecter un changement d'orientation de l'écran d'affichage et dans lequel la carte principale est configurée pour déclencher le mouvement du second composant de la première position à la seconde position en réponse à un signal du capteur indiquant que l'orientation de l'écran d'affichage a changé ; et
dans lequel l'écran d'affichage a une orientation portrait et une orientation paysage et la carte principale est située à l'intérieur du boîtier de telle sorte que la première position du second composant est en dessous de la carte principale et la seconde position est au-dessus de la carte principale lorsque l'écran d'affichage est dans son orientation portrait.

2. Affichage de signalisation numérique selon la revendication 1, dans lequel le capteur est un capteur gyroscopique.

3. Affichage de signalisation numérique selon la revendication 1, dans lequel, lorsque l'écran d'affichage est dans l'orientation portrait, la première position du second composant est en dessous du centre de l'écran d'affichage et la seconde position du second composant est au-dessus du centre de l'écran d'affichage.

4. Affichage de signalisation numérique selon l'une quelconque des revendications 1 à 3, dans lequel la carte principale est configurée pour déclencher le mouvement du second composant de la première position à la seconde position en réponse à un signal du capteur indiquant que l'écran d'affichage s'est déplacé de l'orientation paysage à l'orientation portrait.

5. Affichage de signalisation numérique selon l'une quelconque des revendications 1 à 4, dans lequel le second composant est mobile le long d'au moins un rail de la première position à la seconde position.

6. Affichage de signalisation numérique selon la revendication 5, dans lequel l'affichage de signalisation numérique comprend au moins un moteur pas à pas pour amener le second composant à se déplacer le long de l'au moins un rail de la première position à la seconde position et le déclenchement du mouvement du second composant comprend la fourniture de la puissance à l'au moins un moteur pas à pas.

7. Affichage de signalisation numérique selon la revendication 5 ou 6, dans lequel la carte principale est configurée pour arrêter le mouvement du second composant lorsqu'une connexion est établie entre la carte d'alimentation et l'alimentation et/ou le second composant et la carte principale dans la seconde position.

8. Affichage d'affichage numérique selon l'une quelconque des revendications 1 à 7, dans lequel le second composant est une carte d'alimentation.

9. Procédé de production d'un affichage de signalisation numérique selon l'une quelconque des revendications 1 à 8, le procédé comprenant :
la fourniture d'une carte principale (2) et d'un second composant (4) ;
la fourniture d'un moyen pour déplacer le second composant entre une première position et une seconde position, l'affichage de signalisation numérique comprenant des connexions pour coupler électriquement le second composant à chacune d'une alimentation et de la carte principale dans chacune de la première position et de la seconde position.

10. Procédé de commande de transfert de chaleur dans un affichage de signalisation numérique selon l'une quelconque des revendications 1 à 8, le procédé comprenant : la détection, par un capteur, que l'écran d'affichage est dans un mode portrait ; en réponse à un signal du capteur indiquant que l'écran d'affichage est en mode portrait, le fait de provoquer, par la carte principale (2), le mouvement du second composant (4) de la première position à la seconde position.
